# EUROPÄISCHE PATENTANMELDUNG

(11) **EP 3 502 017 A1**
(43) Veröffentlichungstag der Anmeldung: **26.06.2019**
(21) Anmeldenummer: 18215543.2
(22) Anmeldetag: 21.12.2018
(51) Int. Cl.: B65G 47/244, B65B 35/54

(54) **VORRICHTUNG UND VERFAHREN ZUR HANDHABUNG VON LEBENSMITTELPORTIONEN MIT EINER DREHEINRICHTUNG**

(30) Priorität: 22.12.2017 DE 102017223709
(71) Anmelder: Weber Maschinenbau GmbH Breidenbach, 35236 Breidenbach (DE)
(72) Erfinder: SCHMEISER, Jörg, 87487 Wiggensbach (DE); KUHMICHEL, Christoph, 57334 Bad Laasphe (DE)
(74) Vertreter: Grünecker Patent- und Rechtsanwälte PartG mbB

(57) **Zusammenfassung**

Die Erfindung bezieht sich auf eine Vorrichtung zur Handhabung von Lebensmittelportionen 9, 10, die ein erstes Fördermittel 12, eine Dreheinrichtung 13 mit einem zweiten Fördermittel 16, das eine Ablagefläche 14 bildet, die um eine vertikale Achse 15 verdrehbar ist, ein drittes Fördermittel 17, und eine Steuerung 22 umfasst, wobei das erste Fördermittel 12 so ausgelegt ist, dass es zumindest bereichsweise über der Dreheinrichtung 13 anordenbar ist. Die Steuerung 22 ist eingerichtet, das erste Fördermittel 12 so anzusteuern, dass Lebensmittelportionen 9, 10 in einer Formatanordnung von dem ersten Fördermittel 12 von oben auf die Ablagefläche 14 der Dreheinrichtung 13 abgelegt werden, die Dreheinrichtung 13 anzusteuern, um die Ablagefläche 14 mit den Lebensmittelportionen 9, 10 um die vertikale Achse zu drehen, und das zweite Fördermittel 16 anzusteuern, um die verdrehten Lebensmittelportionen 9, 10 auf das dritte Fördermittel 17 weiterzufördern. Weiterhin bezieht sich die Erfindung auf ein Verfahren zur Herstellung von verpackten Lebensmittelportionen mit einer in die Produktionslinie integrierten Dreheinrichtung.

## Beschreibung

Die vorliegende Erfindung betrifft eine Vorrichtung und ein Verfahren zur Handhabung von Lebensmittelportionen mit einer Dreheinrichtung. Die gattungsgemäßen Vorrichtungen kommen vornehmlich zur Handhabung von Lebensmittelportionen zum Einsatz, die mittels einer Lebensmittelaufschneidemaschine (Slicer) durch Aufschneiden von Lebensmittelprodukten, insbesondere Lebensmittellaiben oder Lebensmittelriegeln, erzeugt wurden.

Dabei handelt es sich vornehmlich um Hochleistungslebensmittelaufschneidemaschinen, die mehr als 100 und insbesondere mehr als 1000 Lebensmittelscheiben pro Minute erzeugen, sodass ein fast kontinuierlicher oder kontinuierlicher Portionsstrom in Richtung einer nachgeschalteten Verpackungsmaschine erzeugt wird.

Um eine kontinuierliche Verarbeitung der Lebensmittelportionen zu ermöglichen, werden Einheiten zur Formatbildung und -pufferung, sowie für das Einlegen in die Verpackung bzw. Übergeben an die Verpackungsmaschine vorgesehen.

Dabei sind insbesondere Pufferstrecken vorgesehen, die es ermöglichen, Pausen bzw. Lücken im Produktstrom auszugleichen, die beispielsweise durch das Beladen der Lebensmittelaufschneidemaschine mit neuen Lebensmittelprodukten entstehen können. Der Anteil dieser Beladungspausen kann ansteigen, je kürzer die aufzuschneidenden Lebensmittelprodukte sind.

Die Pufferstrecken im Bereich der Förder- und Sortierstrecken nach der Lebensmittelaufschneidemaschine verlängern aber die Länge des Lebensmittelverarbeitungssystems bzw. der Produktionslinie. Dies steht der Effizienz entgegen, insbesondere da der verfügbare Platz in Lebensmittel verarbeitenden Betrieben oft begrenzt ist, und die Größe der Anlage den Reinigungsaufwand erhöht.

Es ist im Stand der Technik bekannt, dass einzelne Lebensmittelportionen oder mehrere Lebensmittelportionen gemeinsam gedreht werden. Die dafür bekannten Vorrichtungen haben aber entweder einen hohen Platzbedarf oder erfordern, dass zusätzliche Pufferstrecken vorgesehen werden müssen.

So ist es im Stand der Technik beispielsweise bekannt, einen Gelenkarmroboter neben einer Produktionslinie vorzusehen, mit dem ein beweglicher Fördertisch in Förderrichtung der Produktionslinie ausgerichtet werden kann, sodass durch Bewegung eines Förderbands des Fördertisches Lebensmittelportionen in der Förderrichtung der Produktionslinie auf den Fördertisch aufgenommen werden können. Der Roboter bewegt den Fördertisch dann neben ein nachfolgendes Förderband und verdreht den Fördertisch dabei so, dass die darauf angeordneten Lebensmittelportionen in Querrichtung zur Förderrichtung auf das nachfolgende Förderband abgelegt werden können. Dann werden die folglich um 90° gedrehten Lebensmittelportionen durch das nachfolgende Förderband in der Förderrichtung der Produktionslinie weitergefördert.

Nachteilig an dieser Anordnung ist, dass der von außerhalb der Produktionslinie wirkende Roboter einen relativ großen Sicherheitsbereich erfordert, und damit insbesondere eine relativ große Einhausung des Roboter-Arbeitsbereichs notwendig ist, was einen hohen Platzbedarf und eine eingeschränkte Zugänglichkeit der Produktionslinie bedingt.

Die vorliegende Erfindung hat die Aufgabe eine Vorrichtung und ein Verfahren zur Handhabung von Lebensmittelportionen bereitzustellen, die eine effiziente Handhabung von Lebensmittelportionen ermöglichen.

Erfindungsgemäß wird eine Vorrichtung zur Handhabung von Lebensmittelportionen bereitgestellt, die ein erstes Fördermittel, eine Dreheinrichtung mit einem zweiten Fördermittel, das eine Ablagefläche bildet, und ein drittes Fördermittel umfasst, wobei das erste Fördermittel eingerichtet ist, Lebensmittelportionen in einer Formatanordnung von oben auf die Ablagefläche der Dreheinrichtung abzulegen, wobei die Dreheinrichtung eingerichtet ist, die Ablagefläche mit den Lebensmittelportionen um eine vertikale Achse zu drehen, und wobei das zweite Fördermittel eingerichtet ist, die Lebensmittelportionen auf das dritte Fördermittel weiterzufördern.

Das erste Fördermittel, zweite Fördermittel und dritte Fördermittel sind in dieser Abfolge in einer Förderrichtung der sie umfassenden Produktionslinie angeordnet. Die Richtungsangabe der Förderrichtung ist jeweils in der horizontalen Ebene, wobei die Fördermittel auch ausgelegt sein können, dass sie leicht ansteigend oder abfallend verlaufen. Dies wird aber im Rahmen der Angabe der Förderrichtung im Folgenden nicht berücksichtigt.

Beim Ablegen der Lebensmittelportionen von oben auf die Ablagefläche, wird das erste Fördermittel oberhalb des zweiten Fördermittels angeordnet.

Die Fördermittel umfassen jeweils Antriebe. Weiterhin ist eine zentrale Steuerung vorgesehen, die ausgelegt ist, die jeweiligen Antriebe zum Fördern, Drehen und Bewegen erfindungsgemäß anzusteuern. Bei der Steuerung handelt es sich insbesondere um eine elektronische Steuerung, deren Einrichtung durch ihre Programmierung bestimmt wird.

Die Fördermittel weisen insbesondere ein Förderband auf, das aus einem durchgängigen Bandmaterial oder aus einzelnen Riemen oder Ketten, mit oder ohne zusätzliche Produktträger, gebildet sein kann. Alternativ können in den Fördermitteln auch einzeln verfahrbare Produktträger zu Einsatz kommen, die einzelne Lebensmittelportionen oder ganze Formatanordnungen von Lebensmittelportionen tragen.

In einer Ausführungsform kann das zweite Fördermittel die Lebensmittelportionen immer nur in die Richtung fördern, in der die Dreheinrichtung ausgerichtet ist.

Beim Fördern der Lebensmittelportionen mit dem ersten Fördermittel auf das zweite Fördermittel können die Lebensmittelportionen von oben auf dem stillstehenden zweiten Fördermittel abgelegt werden, so dass keine Förderleistung des zweiten Fördermittels notwendig ist.

Wenn die Förderrichtung des zweiten Fördermittels nun in einem Winkel zu der Förderrichtung des ersten Fördermittels ist, so sind die Lebensmittelportionen nach der Ablage auf dem zweiten Fördermittel um diesen Winkel bezüglich der Förderrichtung des zweiten Fördermittels angeordnet. Wenn dann das zweite Fördermittel durch die Dreheinrichtung in seiner Förderrichtung mit dem dritten Fördermittel ausgerichtet wird, so können die Lebensmittelportionen entsprechend verdreht auf das dritte Fördermittel weiter gefördert werden.

Insbesondere ist das zweite Fördermittel ein Förderband, das sich über die gesamte Breite der Ablagefläche erstreckt.

In einer anderen Ausführungsform weist das zweite Fördermittel mehrere separat antreibbare Förderbänder auf, die parallel nebeneinander in der Ablagefläche angeordnet sind. Somit ist es möglich, in der Förderrichtung des zweiten Fördermittels spurunabhängig zu fördern. Insbesondere werden die Lebensmittelportionen aber so auf dem zweiten Fördermittel abgelegt, dass sie jeweils nur auf einem Förderband zu liegen kommen.

Insbesondere ist das zweite Fördermittel in der Draufsicht um ca. 90° verdreht zur Förderrichtung des ersten Fördermittels ausgerichtet, während die Lebensmittelportionen von dem ersten Fördermittel auf das zweite Fördermittel gefördert werden.

In einer Ausführungsform weist die Drehrichtung ein um eine horizontale Achse drehendes Drehrad auf, an dem das zweite Fördermittel um eine vertikale Achse drehbar gelagert ist. Die Steuerung kann eingerichtet sein, die Drehung des Drehrads und des zweiten Fördermittels zu steuern. Durch die Drehung um die horizontale Achse kann das zweite Fördermittel auf einer Kreisbahn bewegt werden. Das zweite Fördermittel ist von der Drehung um die horizontale Achse entkoppelt, bewegt sich also lediglich auf der Kreisbahn, dreht aber nicht um die horizontale Achse. Weiterhin ist das zweite Fördermittel um eine vertikale Achse drehbar gelagert.

Dadurch ist es möglich, dass das zweite Fördermittel zunächst in eine gewünschte Orientierung um die vertikale Achse gedreht wird, und dann unter dem ersten Fördermittel angeordnet wird, sodass zumindest ein Lebensmittelprodukt vom ersten Fördermittel von oben auf der Ablagefläche in Form des zweiten Fördermittels abgelegt werden kann. Dann dreht sich das Drehrad um die horizontale Achse, sodass das zweite Fördermittel entsprechend auf der Kreisbahn hin zu dem dritten Fördermittel gefahren wird. Vor, während oder nach diesem Verfahren wird das zweite Fördermittel um die vertikale Achse verdreht. Somit kann eine Verdrehung der Lebensmittelportionen auf der durch das zweite Fördermittel gebildeten Ablagefläche erfolgen.

Insbesondere sind mehrere zweite Fördermittel um den Umfang verteilt an dem Drehradjeweils separat um vertikale Achsen drehbar gelagert, wobei jedes der mehreren zweiten Fördermittel eine Ablagefläche bereitstellt. Somit kann beispielsweise gleichzeitig ein zweites Fördermittel durch das erste Fördermittel mit Lebensmittelportionen beladen werden, während Lebensmittelportionen von einem anderen zweiten Fördermittel auf das dritte Fördermittel gefördert werden.

Die Erfindung stellt weiterhin eine Vorrichtung zur Handhabung von Lebensmittelportionen bereit, die ein erstes Fördermittel, eine Dreheinrichtung mit einem zweiten Fördermittel, das eine Ablagefläche bildet, und ein drittes Fördermittel bereitstellt, wobei die Dreheinrichtung eine unter der Ablagefläche angeordnete Bewegungseinrichtung aufweist, die eingerichtet ist, die Ablagefläche mit den Lebensmittelportionen zu drehen, und wobei das zweite Fördermittel eingerichtet ist, die Lebensmittelportionen auf das dritte Fördermittel weiter zu fördern.

Die Erfindung stellt insbesondere eine Vorrichtung zur Handhabung von Lebensmittelportionen bereit, umfassend ein erstes Fördermittel, eine Dreheinrichtung mit einem zweiten Fördermittel, das eine Ablagefläche bildet, ein drittes Fördermittel, und eine Steuerung, wobei die Dreheinrichtung eine unter der Ablagefläche angeordnete Bewegungseinrichtung aufweist, und die Steuerung eingerichtet ist, die Dreheinrichtung anzusteuern, um die Ablagefläche mit den Lebensmittelportionen mittels der Bewegungseinrichtung zu drehen, und das zweite Fördermittel anzusteuern, um die verdrehten Lebensmittelportionen auf das dritte Fördermittel weiterzufördern.

Durch die Anordnung der Bewegungseinrichtung unter der Ablagefläche wird ermöglicht, dass die Dreheinrichtung Platz sparend und dennoch effizient ausgebildet ist. Insbesondere kann die Bewegungseinrichtung ein Roboterarm oder Mechanismus sein, der zumindest ein Verdrehen des zweiten Fördermittels ermöglicht. Beispielsweise kann die Dreheinrichtung eine aktiv drehbare vertikale Achse bereitstellen, deren Verdrehung eine Verdrehung des zweiten Fördermittels bewirkt, insbesondere weil das zweite Fördermittel darauf befestigt ist.

Die Erfindung stellt weiterhin eine Vorrichtung zur Handhabung von Lebensmittelportionen bereit, die ein erstes Fördermittel, eine Dreheinrichtung mit einem zweiten Fördermittel, das eine Ablagefläche bildet, und mit einen Roboter, der die Ablagefläche verfahren und/oder verdrehen kann, und ein drittes Fördermittel umfasst, wobei der Roboter an einem Gestell über dem zweiten Fördermittel befestigt ist, und wobei das zweite Fördermittel eingerichtet ist, die Lebensmittelportionen auf das dritte Fördermittel weiterzufördern.

Die Erfindung stellt insbesondere eine Vorrichtung zur Handhabung von Lebensmittelportionen bereit, umfassend ein erstes Fördermittel, eine Dreheinrichtung mit einem zweiten Fördermittel, das eine Ablagefläche bildet, und mit einem Roboter, der ausgelegt ist, die Ablagefläche zu verfahren und/oder zu verdrehen, ein drittes Fördermittel, und eine Steuerung, die eingerichtet ist, die Fördermittel und den Roboter anzusteuern, wobei der Roboter an einem Gestell über dem zweiten Fördermittel befestigt ist, und wobei die Steuerung eingerichtet ist, das zweite Fördermittel anzusteuern, um die Lebensmittelportionen auf das dritte Fördermittel weiterzufördern.

Insbesondere ist der Roboter ein Portalroboter. Vorteilhafterweise ist der Roboter ausgelegt, die Ablagefläche linear zwischen dem ersten und dritten Fördermittel zu verfahren und dabei zu verdrehen.

Insbesondere sind die Förderrichtung des ersten Fördermittels und die Förderrichtung des dritten Fördermittels gleich.

In einer bevorzugten Ausführungsform ist das erste Fördermittel ein Rückzugsband, das über die Ablagefläche der Dreheinrichtung bewegt werden kann. Bei dem Rückzugsband kann die stromabwärts vorgesehene Rückzugsrolle in Förderrichtung verschieblich sein. Durch gleichzeitiges Fördern mittels Umlauf des Bandes und Verschieben der Rückzugsrolle kann erreicht werden, dass die Lebensmittelportionen an einer gewünschten Position von oben auf der Ablagefläche des zweiten Fördermittels abgelegt werden. Nachdem das zweite Fördermittel gegenüber dem ersten Fördermittel verdreht angeordnet werden kann, kann diese Ablage erfolgen, wenn die Förderrichtungen des ersten und zweiten Fördermittels in verschiedene Richtung ausgerichtet sind, sodass die Lebensmittelportionen bezüglich der jeweiligen Förderrichtung in relativ anderer Orientierung auf dem zweiten Fördermittel angeordnet werden als auf dem ersten Fördermittel.

Es ist aber auch möglich, dass das erste Fördermittel anstelle eines Rückzugsbandes ein in Förderrichtung linear verschiebbares gewöhnliches Förderband ist, das über das zweite Fördermittel verfahren werden kann. In einer solchen Ausgestaltung ist es aber vorteilhaft, wenn vor dem ersten Fördermittel ausreichend Pufferplatz vorgesehen ist, da eine Förderung einem von stromaufwärtigem Fördermittel auf das erste Fördermittel gegebenenfalls unterbrochen werden muss, wenn dieses in die stromabwärtige Förderrichtung verfahren ist.

Der Roboter kann ein Portalroboter sein. Insbesondere ermöglicht der Portalroboter, dass die Ablagefläche zwischen dem ersten und dritten Fördermittel hin und her verfahren werden kann und dabei oder unabhängig davon verdreht werden kann.

Insbesondere ist das erste Fördermittel ein Rückzugsband, das über die Ablagefläche der Dreheinrichtung bewegt werden kann. Das Rückzugsband weist insbesondere eine stromabwärtig angeordnete Rückzugsrolle auf, die in Förderrichtung verfahren werden kann. Das Förderband läuft um die Rückzugsrolle um, und ermöglicht somit ein Ablegen immer genau an der Rückzugsrollenposition, wenn gleichzeitig das Förderband des ersten Fördermittels um die Rückzugsrolle umläuft. Nachdem die Rückzugsrolle über der Ablagefläche des zweiten Fördermittels angeordnet werden kann, kann somit die genaue Platzierung der Lebensmittelportionen auf der Ablagefläche des zweiten Fördermittels erfolgen.

In einer Ausführungsform ist die Ablagefläche des zweiten Fördermittels in Höhenrichtung verstellbar, sodass die Ablagefläche zum Verdrehen aus der Ebene des dritten Fördermittels herausfahrbar ist, und sodass die Ablagefläche auf gleiche Höhe mit dem dritten Fördermittel bewegbar ist, um Lebensmittelportionen von der Ablagefläche auf das dritte Fördermittel zu fördern. Damit wird ermöglicht, dass die Ablagefläche in der Ebene des dritten Förderers bündig an diesen anschließen kann. Der Bandübergang kann somit zur Schonung der transportierten Lebensmittelportionen möglichst gering gehalten werden. Dennoch wird ein Verdrehen ermöglicht, wenn die Ablagefläche aus der Ebene des dritten Förderers herausgefahren wird.

Insbesondere ist die Dreheinrichtung so eingerichtet, dass die Ablagefläche in Förderrichtung der Produktionslinie bewegbar ist, sodass in einer ersten Position die Ablagefläche verdrehbar ist, und in einer zweiten Position die Ablagefläche an das dritte Fördermittel angrenzt, sodass Lebensmittelportionen von der Ablagefläche in der Förderrichtung der Produktionslinie auf das dritte Fördermittel förderbar sind. Auch dies ermöglicht, dass die Ablagefläche bündig an das dritte Fördermittel anschließen kann, um die Lebensmittelportionen von dem zweiten Fördermittel auf das dritte Fördermittel weiterzufördern. Andererseits kann genügend Abstand zwischen der Ablagefläche und dem dritten Fördermittel erreicht werden, sodass die Ablagefläche entsprechend ihres Eck- bzw. Diagonalmaßes verdrehbar ist.

In einer Ausführungsform ist das zweite Fördermittel ein Rückzugsband. Dies ermöglicht, dass eine stromaufwärtige oder stromabwärtige Rückzugsrolle des zweiten Fördermittels in Förderrichtung des zweiten Fördermittels verfahren werden kann, wodurch das zweite Fördermittel bündig an das erste Fördermittel und/oder dritte Fördermittel angeschlossen werden kann bzw. davon zurückgezogen werden kann, um ein Verdrehen zu ermöglichen.

In einer Ausführungsform umfasst die Vorrichtung zur Handhabung von Lebensmittelportionen eine modulare Kassette, die in eine entsprechende Aufnahme in der Vorrichtung einsetzbar und aus dieser Aufnahme entnehmbar ist. Die modulare Kassette weist die Dreheinrichtung und ihre sämtlichen Antriebe auf und bildet ein Modul in der Förderstrecke, das bedarfsabhängig in diese integrierbar ist. Insbesondere kann die Kassette mit Dreheinrichtung durch eine Kassette ausgetauscht werden, die lediglich ein einfaches Fördermittel, zum Beispiel ein durchlaufendes Förderband ohne Dreheinrichtung aufweist, wenn die Drehfunktion nicht benötigt wird. Dadurch kann an dieser Stelle dann mehr Pufferfläche für weitere Lebensmittelportionen zur Verfügung stehen.

Insbesondere ist die Dreheinrichtung so ausgestaltet, dass sie nicht über die seitlichen Begrenzungen des ersten und/oder dritten Fördermittels übersteht. Somit kann die Dreheinrichtung vorgesehen werden, ohne dass die Vorrichtung zur Handhabung von Lebensmittelportionen verbreitert wird.

In einer Ausführungsform ist die Dreheinrichtung so ausgestaltet, dass das zweite Fördermittel um eine exzentrisch angeordnete vertikale Achse verdrehbar ist. Insbesondere ist die Achse an einer Seitenkante oder einer Ecke des zweiten Fördermittels vorgesehen.

Alternativ oder ergänzend ist es möglich, dass ein zur Dreheinrichtung benachbartes Fördermittel angehoben oder abgesenkt wird. Dann kann auch ohne Rückzugsband oder Längs- oder Höhenverfahren der Dreheinrichtung genügend Platz für das Drehen der Dreheinrichtung bereitgestellt werden. Insbesondere reicht das einseitige Anheben des angrenzenden Fördermittels auf seiner an die Dreheinrichtung angrenzenden Seite. Dann können jeweils am anderen Ende des Fördermittels weiterhin Lebensmittelportionen abgefördert oder aufgenommen werden. Insbesondere wird nur eine Seite des Fördermittels angehoben, so dass das Fördermittel um wenigstens 5°, insbesondere aber weniger als 10° schräggestellt ist.

Die Erfindung stellt weiterhin ein Verfahren zur Herstellung von verpackten Lebensmittelportionen mittels einer Produktionslinie bereit, bei dem zunächst ein Lebensmittelprodukt aufgeschnitten wird, um Lebensmittelportionen zu erzeugen, die Lebensmittelportionen entlang einer Förderrichtung der Produktionslinie gefördert werden, die Lebensmittelportionen in einer Formatanordnung angeordnet werden, die in der Formatanordnung angeordneten Lebensmittelportionen durch eine in die Produktionslinie integrierte Dreheinrichtung gedreht werden, und schließlich die Lebensmittelportionen verpackt werden.

Durch das Drehen des ganzen Formates kann die Effizienz des Drehens erhöht werden. Dadurch, dass die Dreheinrichtung in die Produktionslinie integriert ist, können von der Seite eingreifende Handhabungsmittel vermieden werden, wodurch ein geringerer Sicherheitsbereich notwendig ist und eine höhere Anlageneffizienz erreicht wird.

Insbesondere weist die Produktionslinie bzw. das Lebensmittelverarbeitungssystem eine verkettete Abfolge der folgenden Vorrichtungen auf: eine Lebensmittelaufschneidemaschine (Slicer), zum ein- oder mehrspurigen Aufschneiden von Lebensmittelprodukten, eine Portionierablageeinrichtung, eine Gruppier- und Ausrichteinrichtung, eine Formatbildungseinrichtung, eine Puffereinrichtung, eine Vereinzelungseinrichtung, zum Zusammenführen von mehreren Spuren auf eine Spur, und eine Verpackungsmaschine, insbesondere eine SchlauchbeutelVerpackungsmaschine. Eine mehrspurige Produktionslinie weist mehrere Spuren auf, die sich in Förderrichtung der Produktionslinie parallel erstrecken. Die Lebensmittelportionen in den einzelnen Spuren können aufeinander ausgerichtet werden, insbesondere an gleicher Position in Richtung der Förderrichtung der Produktionslinie angeordnet werden, und bilden dann eine Reihe von Lebensmittelportionen, die jeweils eine Lebensmittelportion pro Spur umfasst.

Der Schritt des Anordnens der Lebensmittelportionen in der Formatanordnung umfasst insbesondere, dass die einzelnen Lebensmittelportionen zueinander in einer vorbestimmten relativen Anordnung ausgerichtet werden, wobei diese relative Anordnung beim Drehen beibehalten wird. Damit muss nach dem Drehen keine erneute Anordnung in einem Format erfolgen, sondern die Lebensmittelportionen können in ihrer relativen Anordnung direkt weiterverarbeitet werden.

Insbesondere weist die Dreheinrichtung ein Fördermittel auf, das in einem Winkel oder quer zu der Förderrichtung der Produktionslinie steht, während die in der Formatanordnung angeordneten Lebensmittelportionen darauf abgelegt werden, wobei das Fördermittel der Dreheinrichtung dann so durch Verdrehen ausgerichtet wird, dass seine Förderrichtung in die Förderrichtung der Produktionslinie zeigt, wobei dann die Lebensmittelportionen von der Dreheinrichtung abgefördert werden können. Insbesondere ist der Winkel größer gleich 20°, größer gleich 45°, größer gleich 70° oder ungefähr 90°.

In einer Ausführungsform werden die in der Formatanordnung angeordneten Lebensmittelportionen mittels eines Rückzugsbandes auf die Dreheinrichtung gefördert, wobei eine bewegliche Rückzugsrolle des Rückzugsbandes mit einer Relativgeschwindigkeit in der Förderrichtung des Rückzugsbandes über der Dreheinrichtung bewegt wird, wobei das Rückzugsband mit einer Fördergeschwindigkeit betrieben wird, die auf die Relativgeschwindigkeit abgestimmt ist.

Insbesondere kann die Antriebsgeschwindigkeit des Rückzugsbandes gleich der Relativgeschwindigkeit der Bewegung der beweglichen Rückzugsrolle über der Dreheinrichtung sein, sodass das Rückzugsband unter im wesentlichen stillstehenden Lebensmittelportionen weggezogen wird, und diese unter Beibehaltung Ihrer Formatanordnung auf der Ablagefläche der Dreheinrichtung abgelegt werden.

Die Dreheinrichtung kann vor, während und/oder nach dem Drehen höhenverstellt werden, um das Drehen und/oder Abfördern der in der Formatanordnung angeordneten Lebensmittelportionen zu ermöglichen. Insbesondere kann die Dreheinrichtung auf eine Höhe verstellt werden, die höher oder niedriger als ein nachfolgendes Fördermittel ist, um das Drehen ohne Kontakt zwischen den Fördermitteln und deren Lebensmittelportionen zu ermöglichen. Weiterhin kann die Dreheinrichtung auf die gleiche Höhe wie ein nachfolgendes Fördermittel verstellt werden, um das Abfördern der Lebensmittelportionen zu ermöglichen. Insbesondere kann vorgesehen sein, dass sich die Dreheinrichtung zusätzlich zur Drehbewegung ausschließlich in der Vertikalrichtung bewegt.

In einer Ausführungsform wird die Dreheinrichtung vor, während und/oder nach dem Drehen längsverstellt, um das Drehen und/oder Abfördern der in der Formatanordnung angeordneten Lebensmittelportionen zu ermöglichen. Insbesondere kann die Dreheinrichtung in einem Abstand zu dem vorgeordneten oder nachfolgenden Fördermittel angeordnet werden, um das Drehen ohne Kontakt zwischen den Fördermitteln und deren Lebensmittelportionen zu ermöglichen. Zudem kann die Dreheinrichtung mittels der Längsverstellung an das nachfolgende Fördermittel angeschlossen werden, um ein Abfördern der Lebensmittelportionen von der Dreheinrichtung auf das nachfolgende Fördermittel zu ermöglichen.

Vorteilhaftweise wird die Dreheinrichtung lediglich innerhalb der Produktionslinie bewegt. Insbesondere wird die Dreheinrichtung innerhalb der seitlichen Begrenzungen der vorangehenden und/oder nachfolgenden Fördermittel bewegt.

In einer Ausführungsform erfolgt das Aufschneiden des Lebensmittelprodukts in mehreren Spuren, wobei jeweils wenigstens zwei Lebensmittelportionen aus verschiedenen Spuren durch das Drehen in einer Spur angeordnet werden, und dann zusammen verpackt werden. Insbesondere wird dies ermöglicht, indem die in einem Formatsatz angeordneten Lebensmittelportionen von verschiedenen Spuren verdreht werden, sodass die Lebensmittelportionen von unterschiedlichen Spuren hintereinander in Produktionsrichtung angeordnet werden.

Insbesondere werden wenigstens zwei Lebensmittelportionen nach dem Aufschneiden gruppiert, wobei die gruppierten Lebensmittelportionen in der Formatanordnung angeordnet werden. Bei Aufschneiden des Lebensmittelprodukts werden die einzelnen Scheiben zunächst im Rahmen des Portionierens aufeinander abgelegt. Dabei können Zwischenblätter zwischen die Scheiben der Lebensmittelportion eingebracht werden. Die Zwischenblätter sind insbesondere aus Papier oder Plastikfolie. Die Zwischenblätter können insbesondere auf der stromaufwärtigen Seite über die jeweils durch sie getrennten Scheiben überstehen.

Nach dem Portionieren werden die Lebensmittelportionen beim Gruppieren jeweils in Gruppen auf unterschiedliche, parallel angeordnete Fördermittel bewegt und gegebenenfalls aufeinander ausgerichtet. Die ausgerichteten und gruppierten Lebensmittelportionen werden dann auf ein weiteres Fördermittel gefördert, auf dem das Format gebildet wird, wobei in diesem Bereich auch eine Puffervorrichtung vorgesehen sein kann.

Insbesondere werden die in der Formatanordnung angeordneten Lebensmittelportionen um 90° durch die Dreheinrichtung gedreht. Damit werden die in vorher parallelen Spuren angeordneten Lebensmittelportionen einer Reihe jeweils in einer Spur angeordnet. Dies ermöglicht insbesondere, dass Lebensmittelportionen, die von verschiedenen Lebensmittelprodukten in verschiedenen Spuren erzeugt wurden, in einer Spur zusammengeführt und zusammen verpackt werden können.

Vorzugsweise erfolgt das Drehen der Lebensmittelportionen jeweils um 90° um die vertikale Achse. Das Drehen der Lebensmittelportionen erfolgt nach der Formatbildung, in der die Lebensmittelportionen genau aufeinander ausgerichtet und in vorbestimmten Abständen zueinander in einer Formatanordnung angeordnet werden, und zwar vorteilhafterweise bereits genauso wie dies in der Verpackung bzw. zum Einlegen in eine Verpackung benötigt wird. Insbesondere kann auch bereits bei der Formatbildung ein Gruppieren der Lebensmittelportionen erfolgen, beispielsweise von immer zwei Lebensmittelportionen zu einer Gruppe, die dann als Gruppe verpackt wird. Mehrere gruppierte Lebensmittelportionen können gemeinsam als Formatanordnung gedreht werden.

Wie in den vorangehenden Ausführungsformen gesehen werden kann, weist die Dreheinrichtung zumindest ein angetriebenes Förderband zum Abgeben und/oder Aufnehmen der Lebensmittelportionen in Formatanordnung auf. Insbesondere werden ein durchgehendes breites Förderband oder alternativ einzeln angetriebene Spuren auf der Dreheinrichtung vorgesehen.

Die Dreheinrichtung wird bei der Aufnahme einer Formatanordnung von Lebensmittelportionen von einem vorgeschalteten Fördermittel zunächst so ausgerichtet, dass ihre Förderrichtung quer zur Produktionslinie steht, und sobald die Lebensmittelportionen darauf angeordnet sind so ausgerichtet, dass sie in Förderrichtung der Produktionslinie steht und die Lebensmittelportionen entsprechend abgefördert werden können. In einer Ausführungsform kann die Dreheinrichtung als modulare Drehkassette vorgesehen sein, die alle notwendigen Antriebe aufweist und somit ein autarkes Modul bildet, das in die Produktionslinie bedarfsabhängig integrierbar ist. Somit kann die Drehkassette gegen eine einfache Kassette mit durchlaufendem Förderband ausgetauscht werden, wenn keine Drehfunktion benötigt wird.

Die Erfindung wird nun weitergehend anhand von beispielhaften Ausführungsformen beschrieben, die in den folgenden Figuren dargestellt sind:
Figur 1 zeigt eine Draufsicht auf eine Produktionslinie mit einer erfindungsgemäßen Vorrichtung zur Handhabung von Lebensmittelportionen.
Figur 2 zeigt eine Seitenansicht einer ersten Ausführungsform einer erfindungsgemäßen Vorrichtung zur Handhabung von Lebensmittelportionen.
Figur 3 zeigt eine Draufsicht auf eine zweite Ausführungsform einer erfindungsgemäßen Vorrichtung zur Handhabung von Lebensmittelportionen mit der Dreheinrichtung in einer Ausgangsstellung.
Figur 4 zeigt die Seitenansicht von Figur 3.
Figur 5 zeigt eine Draufsicht auf die zweite Ausführungsform mit zurückgezogenem erstem Fördermittel.
Figur 6 zeigt eine Seitenansicht von Figur 5.
Figur 7 zeigt eine Draufsicht auf die zweite Ausführungsform mit der Dreheinrichtung in Verdrehstellung.
Figur 8 zeigt eine Seitenansicht von Figur 7.
Figur 9 zeigt eine Seitenansicht einer dritten Ausführungsform einer erfindungsgemäßen Vorrichtung zur Handhabung von Lebensmittelportionen.
Figur 10 zeigt eine Seitenansicht einer vierten Ausführungsform einer erfindungsgemäßen Vorrichtung zur Handhabung von Lebensmittelportionen.
Figur 11 zeigt eine Draufsicht auf eine fünfte Ausführungsform einer erfindungsgemäßen Vorrichtung zur Handhabung von Lebensmittelportionen mit der Dreheinrichtung in Ausgangsstellung.
Figur 12 zeigt eine Draufsicht auf eine fünfte Ausführungsform einer erfindungsgemäßen Vorrichtung zur Handhabung von Lebensmittelportionen mit der Dreheinrichtung in Verdrehstellung.
Figur 13 zeigt eine Draufsicht auf eine sechste Ausführungsform einer erfindungsgemäßen Vorrichtung zur Handhabung von Lebensmittelportionen mit der Dreheinrichtung in Ausgangsstellung.
Figur 14 zeigt eine Seitenansicht von Figur 13.
Figur 15 zeigt eine Draufsicht auf die sechste Ausführungsform einer erfindungsgemäßen Vorrichtung zur Handhabung von Lebensmittelportionen mit der Dreheinrichtung in Verdrehstellung.
Figur 16 zeigt eine Seitenansicht einer siebten Ausführungsform einer erfindungsgemäßen Vorrichtung zur Handhabung von Lebensmittelportionen.
Figur 17 zeigt eine Seitenansicht einer achten Ausführungsform einer erfindungsgemäßen Vorrichtung zur Handhabung von Lebensmittelportionen.
Figur 18 zeigt eine Draufsicht auf eine weitere Ausführungsform einer Dreheinrichtung.
Figur 19 zeigt eine perspektivische Ansicht der Dreheinrichtung aus Figur 18.

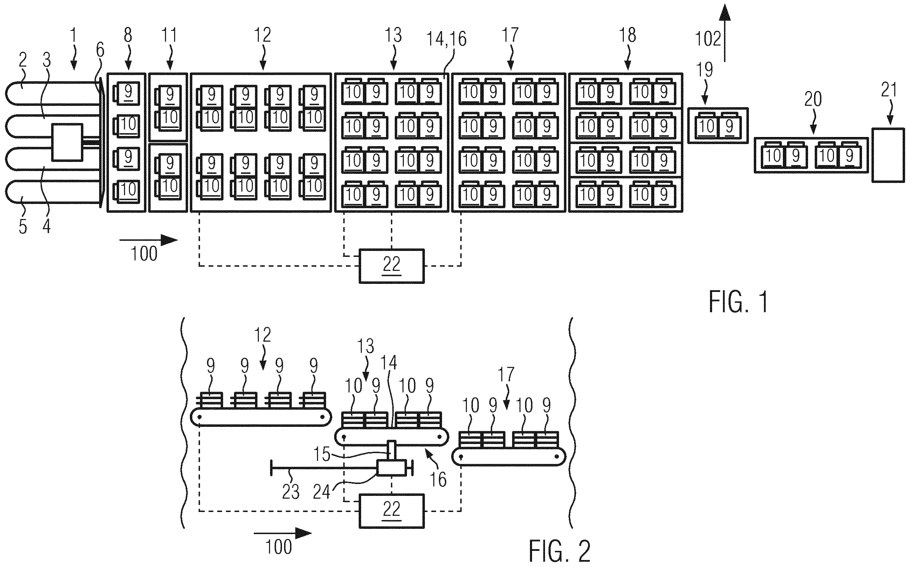

In Figur 1 ist eine Lebensmittelproduktionslinie in Draufsicht dargestellt, wobei in einer Lebensmittelaufschneidemaschine 1 mehrere Lebensmittelprodukte 2, 3, 4, 5 mittels eines rotierenden Messers 6 aufgeschnitten werden. Die Lebensmittelprodukte 2, 3, 4, 5 können beispielsweise Käse-, Wurst- oder Schinkenstangen sein. In der vorliegenden Ausführungsform unterscheiden sich die Lebensmittelprodukte 2, 4 von den Lebensmittelprodukten 3, 5. Grundsätzlich ist die Erfindung auch für gleiche Lebensmittelprodukte 2, 3, 4, 5 in den benachbarten, parallelen Spuren einsetzbar. Beispielsweise können die ersten Lebensmittelprodukte 2, 4 Schinkenstangen sein, und die zweiten Lebensmittelprodukte 3, 5 Wurststangen. Alternativ können unterschiedliche Käsesorten aufgeschnitten werden, und die Lebensmittelportion dann miteinander kombiniert werden.

Beim Aufschneiden durch die Lebensmittelaufschneidemaschine 1 werden Lebensmittelportionen erzeugt, die insbesondere jeweils aus gestapelten oder geschindelten Lebensmittelscheiben bestehen, wobei zwischen den einzelnen Scheiben Zwischenblätter 7 vorgesehen sein können, die beim Aufschneidevorgang zwischen die Scheiben eingeschossen werden. Die Zwischenblätter 7 stehen insbesondere in der stromaufwärtigem Richtung über die Scheiben der Lebensmittelportionen über.

Die Lebensmittelportionen werden durch Stapeln von Lebensmittelscheiben auf einer Portionsablage 8 erzeugt. Aufgrund der verschiedenen Lebensmittelprodukte 2, 4 bzw. 3, 5 entstehen jeweils abwechselnd Lebensmittelportionen 9,10 unterschiedlichen Typs, nämlich erste Lebensmittelportionen 9 und zweite Lebensmittelportionen 10. In der vorliegenden Ausführungsform sind vier Spuren von Lebensmittelportionen 9, 10 nebeneinander vorgesehen, wobei jede Spur zunächst nur entweder erste oder zweite Lebensmittelportionen 9, 10 aufweist. Jede Reihe von Lebensmittelportionen 9, 10 weist vier Lebensmittelportionen auf, mit jeweils zwei ersten Lebensmittelportionen 9 und zwei zweiten Lebensmittelportionen 10. Die Portionsablage 8 ist insbesondere ein Fördermittel, beispielsweise ein Förderband, das die fertiggestellten Lebensmittelportionen 9, 10 in einer Förderrichtung 100 der Produktionslinie weiter fördern kann.

Die Lebensmittelportionen werden dann auf eine Ausricht- und Gruppiereneinrichtung 11 bewegt, in der die Lebensmittelportionen relativ zueinander verfahren werden können. Dafür sind beispielsweise einzeln ansteuerbare Fördermittel vorgesehen, mit unterschiedlichen Fördergeschwindigkeiten in der Förderrichtung 100 der Produktionslinie oder in der Querrichtung 102. Jedenfalls werden die Lebensmittelportionen 9, 10 von der Ausricht- und Gruppiereneinrichtung 11 so ausgerichtet, dass sie auf ein erstes Fördermittel 12 gefördert werden können, das eine Formatbildungs- und Puffereinrichtung darstellt. Auf dem ersten Fördermittel 12 sind die Lebensmittelportionen 9, 10 dann in einer gewünschten Formatanordnung angeordnet, das heißt in einer vorbestimmten Anordnung zueinander angeordnet.

Dabei bestehen die Lebensmittelportionsreihen in Querrichtung 102 jeweils abwechselnd aus ersten und zweiten Lebensmittelportionen 9, 10 und die jeweiligen Spuren in Förderrichtung 100 immer aus einem Typ von Lebensmittelportionen 9 oder 10.

Die Formatanordnung der Lebensmittelportionen 9, 10 wird dann in der Förderrichtung 100 der Produktionslinie auf eine Ablagefläche 14 einer Dreheinrichtung 13 gefördert, die um eine vertikale Achse 15 verdreht werden kann.

In Figur 1 ist die Ablagefläche 14 bereits in der Verdrehstellung dargestellt. Durch das Verdrehen der Ablagefläche 14 der Dreheinrichtung 13 können die daraufangeordneten Lebensmittelportionen 9, 10 gemeinsam im Formatsatz um die vertikale Achse 15 verdreht werden, und zwar in der vorliegenden Ausführungsform um 90°. Somit sind nun die ersten und zweiten Lebensmittelportionen 9, 10 abwechselnd in einer Spur angeordnet, wie in Figurl gezeigt. Die Ablagefläche 14 wird durch ein zweites Fördermittel 16 bereitgestellt, wobei es sich dabei insbesondere um ein Förderband handelt. In einer Ausgangsstellung der Ablagefläche 14 der Dreheinrichtung 13 ist die Förderrichtung 101 des zweiten Fördermittels in Querrichtung 102 zur Förderrichtung 100 der Produktionslinie ausgerichtet. In der in Figur 1 und 2 gezeigten Verdrehstellung ist die Förderrichtung 101 des zweiten Fördermittels 16 in Richtung der Förderrichtung 100 der Produktionslinie ausgerichtet.

Jedenfalls werden die durch die Dreheinrichtung 13 unter Beibehaltung ihrer Formatanordnung gedrehten Lebensmittelportionen 9, 10 durch das zweite Fördermittel 16 dann auf ein drittes Fördermittel 17 weiter gefördert, das eine weitere Puffereinrichtung darstellt, insbesondere in Form eines Förderbandes.

An das dritte Fördermittel 17 schließt sich eine Vereinzelungseinrichtung 18 an und eine Zusammenführeinrichtung 19, die beispielsweise aus einem in Querrichtung 102 verschiebbaren Förderband besteht, und ermöglicht, dass die Lebensmittelportionen 9, 10 der verschiedenen Spuren auf eine Eintaktspur 20 einer Verpackungsmaschine 21 zusammengeführt werden können. Insbesondere wird jeweils aufeinanderfolgend eine erste und zweite Lebensmittelportion 9, 10 auf der Eintaktspur 20 angeordnet, sodass diese gemeinsam verpackt werden können.

In Figur 2 wird die erfindungsgemäße Ausführungsform der Vorrichtung zur Handhabung von Lebensmittelportionen aus Figur 1 in Seitenansicht dargestellt, wobei die Vorrichtung das erste Fördermittel 12, die Dreheinrichtung 13 mit dem zweiten Fördermittel 16 und ein drittes Fördermittel 17 umfasst, die jeweils von einer zentralen Steuerung 22 angesteuert werden können. Weiterhin ist es auch möglich, dass die Steuerung 22 auch die anderen Komponenten der Produktionslinie aus Figur 1 zentral steuert.

Das erste Fördermittel 12 und das dritte Fördermittel 17 sind jeweils ortsfest angeordnet. Das zweite Fördermittel 16 der Dreheinrichtung 13 kann entlang der Förderrichtung 100 der Produktionslinie auf einer Linearführung 23 verfahren werden. Dafür ist ein Schlitten 24 vorgesehen, der durch einen von der Steuerung 22 angesteuerten Antrieb auf der Linearführung 23 verschoben werden kann. Das zweite Fördermittel 16 ist um die vertikale Achse 15 verdrehbar auf dem Schlitten 24 angeordnet, wobei für die Drehbewegung ebenfalls ein durch die Steuerung 22 gesteuerter Antrieb vorgesehen ist.

Wie in Figur 2 dargestellt, ist die Oberseite und Ablagefläche 14 des zweiten Fördermittels 16 knapp unter der Unterseite des ersten Fördermittels 12 angeordnet, sodass das zweite Fördermittel 16 unter das erste Fördermittel 12 gefahren werden kann. Wird nun der Schlitten 24 mit gleicher oder im Wesentlichen gleicher Fördergeschwindigkeit wie das erste Fördermittel 12 in Förderrichtung 100 der Produktionslinie entlang der Linearführung 23 verschoben, so können die Lebensmittelportionen 9, 10 von oben auf der Ablagefläche 14 der Dreheinrichtung 13 abgelegt werden, ohne dass das zweite Fördermittel 16 dafür eine Förderbewegung durchführen müsste. Dies ermöglicht, dass die Ablagefläche 14 und damit das zweite Fördermittel 16 in einer Ausgangsstellung angeordnet werden können, in der die Förderrichtung 100 der Produktionslinie nicht mit der Förderrichtung 101 des zweiten Fördermittels 16 ausgerichtet ist, sondern in einem Winkel dazu verdreht ist.

Insbesondere ist das zweite Fördermittel 16 in der Ausgangsstellung so verdreht, dass seine Förderrichtung 101 in der Querrichtung 102 ausgerichtet ist. Nachdem die Formatanordnung der Lebensmittelportionen 9, 10 auf der Ablagefläche 14 angeordnet wurde, wird das zweite Fördermittel 16 um die vertikale Achse 15 verdreht, sodass die Förderrichtung 101 des zweiten Fördermittels 16 mit der Förderrichtung der Produktionslinie 100 ausgerichtet wird, und somit auch mit der Förderrichtung des dritten Fördermittels 17.

Dann können die ersten und zweiten Lebensmittelportionen 9, 10 von dem zweiten Fördermittel 16 auf das dritte Fördermittel 17 gefördert werden. Der Schlitten 24 mit der vertikalen Achse 15 stellt eine unter der Ablagefläche 14 angeordnete Bewegungseinrichtung dar, mit der die Ablagefläche 14 mit den Lebensmittelportionen 9, 10 gedreht werden kann.

Wie in Figur 2 gesehen werden kann, ist das zweite Fördermittel 16 knapp oberhalb des dritten Fördermittels 17 angeordnet, sodass eine Verdrehung ermöglicht wird, ohne dass die Fördermittel 16, 17 miteinander in Kontakt kommen.

Alternativ kann auch eine Höhenverstellung für das zweite Fördermittel 16 vorgesehen sein, die ebenfalls durch die zentrale Steuerung 22 gesteuert werden kann, sodass das zweite Fördermittel 16 auf gleiche Höhe mit dem dritten Fördermittel 17 gebracht werden kann, wenn es in der Verdrehstellung ist, sodass die Lebensmittelportionen 9, 10 auf gleicher Ebene und bündig vom zweiten Fördermittel 16 auf das dritte Fördermittel 17 gefördert werden können.

Wie in Figur 1 und Figur 2 gesehen werden kann, ist die Dreheinrichtung 13 für das Drehen einer gesamten Formatanordnung von Lebensmittelportionen ausgelegt und in die Produktionslinie integriert. Die Lebensmittelportionen 9, 10 aus verschiedenen Spuren können folglich in mehreren Spuren zusammengeführt werden, wobei dies insbesondere vorteilhaft ist bei der Herstellung von sogenannten Twinstacks, d.h. von Kombinationen von jeweils zwei Lebensmittelportionen 9, 10, welche in einer Schlauchbeutelverpackungsmaschine gemeinsam in einem Schlauchbeutel verpackt werden.

Bei der Zusammenführeinrichtung 19 kann es sich alternativ auch um einen Plattenverteiler handeln, in dem mittels querverschieblichen Plattenelementen die Lebensmittelportionen 9, 10 von mehreren Spuren auf einer Spur zusammengeführt werden können.

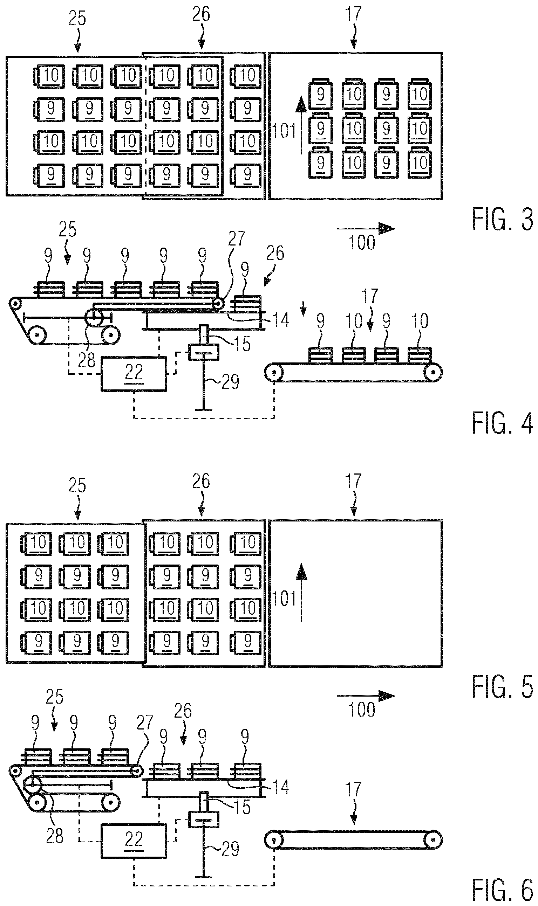

In Figuren 3 bis 8 ist eine zweite Ausführungsform der Erfindung dargestellt, die sich vornehmlich dadurch auszeichnet, dass das erste Fördermittel 25 als Rückzugsband ausgestaltet ist, und dass in der Dreheinrichtung 26 eine Verdrehung und Höhenverstellung des zweiten Fördermittels 16 erfolgen kann.

In Figuren 3 und 4 ist die längs der Förderrichtung 100 verschiebliche, stromabwärts angeordnete Rückzugsrolle 27 des ersten Fördermittels 25 über der Ablagefläche 14 des zweiten Fördermittels 16 angeordnet. Die vordere Rückzugsrolle 27 wird kontinuierlich gegen die Förderrichtung 100 zurückgezogen, wobei die Anspannung des Rückzugsbandes durch eine entsprechende Bewegung der Ausgleichsrolle 28 aufrechterhalten wird. Die Rückzugsrolle 27 und die Ausgleichsrolle 28 sind an einem verschiebbaren Träger angeordnet. Die Bewegung der Rückzugsrolle 27 kann durch einen Antrieb erfolgen, der den Träger linear verschiebt.

Dabei wird das Förderband des ersten Fördermittels 24 so bewegt, dass die darauf angeordneten Lebensmittelportionen 9, 10 im Wesentlichen an Ort und Stelle verbleiben, während das Rückzugsband unter ihnen weggezogen wird, sodass sie auf der direkt darunter angeordneten Auflagefläche 14 des zweiten Fördermittels 16 der Dreheinrichtung 26 zum Liegen kommen.

Der vollständig zurückgezogene Zustand des Rückzugsbandes ist dann in Figuren 5 und 6 dargestellt, wobei gesehen werden kann, dass ein kompletter Formatsatz von Lebensmittelprodukten 9, 10 auf der Ablagefläche 14 aufliegt. Nun wird die Ablagefläche 14 mittels der Dreheinrichtung 26 von der Ausgangsstellung in die Verdrehstellung verdreht, so dass die Förderrichtung 101 des zweiten Fördermittels 16 mit der Förderrichtung des dritten Fördermittels 17 ausgerichtet ist, die insbesondere der Förderrichtung 100 der Produktionslinie entspricht. Vor, während oder nach dem Verdrehen des zweiten Fördermittels 16 wird das zweite Fördermittel 16 durch die Höhenverstelleinrichtung 29 vertikal bewegt, sodass ein Kontakt zwischen den Fördermitteln 25, 16 und 17 untereinander und den darauf angeordneten Lebensmittelportionen 9, 10 verhindert wird.

Alternativ ist es auch möglich, dass keine Höhenverstelleinrichtung eingesetzt wird, sondern dass das Rückzugsband so weit zurückgezogen wird, dass eine ungewollte Berührung zwischen dem ersten Fördermittel 25 und dem zweiten Fördermittel 17 bzw. den darauf angeordneten Lebensmittelportionen 9, 10 bei Verdrehen nicht auftreten kann.

Zudem kann das zweite Fördermittel 16 geringfügig über dem dritten Fördermittel 17 angeordnet sein, sodass ein Verdrehen möglich ist und dennoch die Lebensmittelportionen 9, 10 ohne wesentliche Stufe von dem zweiten Fördermittel 16 auf das dritte Fördermittel 17 gefördert werden können. Somit wird die Ausgleichsrolle immer genau so mit der Rückzugsrolle 27 mitbewegt, dass die Bandspannung des ersten Fördermittels 24 erhalten bleibt.

Auch in der zweiten Ausführungsform ist eine Steuerung 22 vorgesehen, die die jeweiligen Antriebe des ersten Fördermittels 25, der Verstellung der Rückzugsrolle 27 und Ausgleichsrolle 28, des zweiten Fördermittels 16, der Drehung des zweiten Fördermittels 16 um die vertikale Achse 15, der Höhenverstelleinrichtung 29 und des dritten Fördermittels 17 gezielt ansteuern kann.

In der zweiten Ausführungsform gemäß Figuren 3 bis 8 kann somit das gesamte Format von Lebensmittelportionen 9, 10 von dem ersten Fördermittel 25 mittels Antrieb des Förderbandes des ersten Fördermittels 25 und Rückzug der Rückzugsrolle 27 auf die Ablagefläche 14 des zweiten Fördermittels 16 verlagert werden. Dabei steht das zweite Fördermittel 16 im Moment der Aufnahme der Lebensmittelportionen quer zur Förderrichtung 100 der Produktionslinie und befindet sich auf einem geringfügig tieferen Niveau als das vorgeordnete erste Fördermittel 25. Nachdem alle Lebensmittelportionen 9, 10 der Formatanordnung auf dem zweiten Fördermittel 16 abgelegt wurden, wird das gesamte Format um 90° gedreht und auf das nachfolgende dritte Fördermittel 17 gefördert, welches zur Pufferung mindestens einer Formatanordnung von Lebensmittelportionen 9, 10 ausgebildet ist. Dabei bleibt die Position der vertikalen Drehachse 15 unverändert, aber das Höhenniveau des zweiten Fördermittels 17 kann über die Höhenverstelleinrichtung 29 geändert werden, um beim Drehen nicht in Kontakt mit den Bandkanten des stromabwärtig oder stromaufwärtig angeordneten Fördermittels 17, 25 zu kommen.

Die Dreheinrichtung 26 kann das zweite Fördermittel 16 beim Drehen mittels der Höhenverstelleinrichtung 29 entweder leicht anheben oder absenken und nach dem Verdrehen wieder in die vorherige Stellung verfahren.

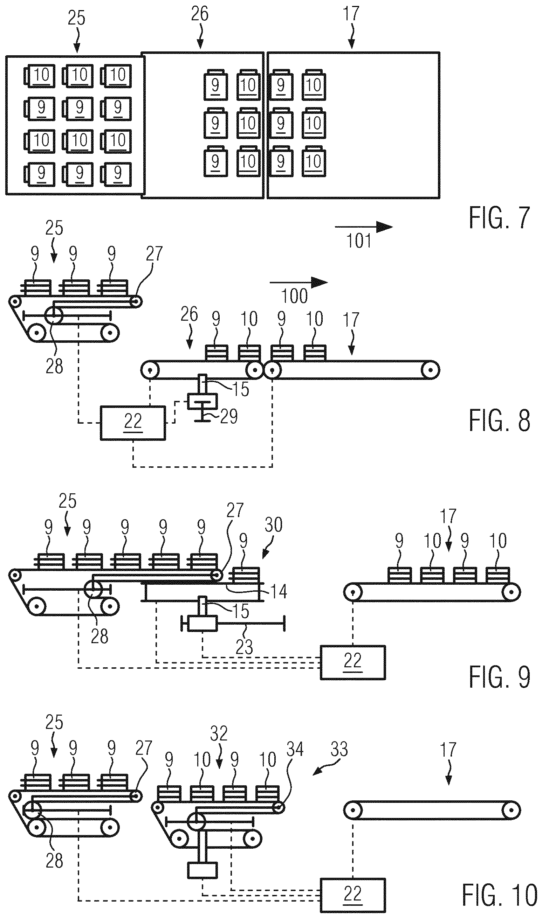

Figur 9 zeigt eine dritte Ausführungsform, bei der die Dreheinrichtung 30 im Wesentlichen wie bei der ersten Ausführungsform ausgestaltet ist, d.h. dass die Dreheinrichtung 30 eine Linearführung 31 in Förderrichtung 100 der Produktionslinie aufweist. Darauf kann wiederum ein Schlitten 24 verfahren werden, auf dem das zweite Fördermittel 16 um die vertikale Achse 15 verdrehbar vorgesehen ist. Als erstes Fördermittel 25 ist ein Rückzugsband vorgesehen, mit dem die Lebensmittelportionen 9, 10 auf das zweite Fördermittel 16 in Formatanordnung abgelegt werden können. Weiterhin kann in der dritten Ausführungsform gemäß Figur 9 das dritte Fördermittel 17 auf gleicher Höhe wie das zweite Fördermittel 16 angeordnet werden, und ein Kontakt zwischen den Fördermitteln untereinander oder mit den Lebensmittelportionen 9, 10 kann durch die Längsverstellung des zweiten Fördermittels 16 verhindert werden. Somit kann das Höhenniveau der Ablagefläche 14 beibehalten werden und lediglich die vertikale Drehachse 15 wird in Förderrichtung 100 der Produktionslinie verschoben. Durch das Verfahren des zweiten Fördermittels 16 in Förderrichtung 100 kann ein einwandfreier Bandübergang zwischen dem zweiten Fördermittel 16 und dem dritten Fördermittel 17 gewährleistet werden.

Wie in der zweiten und dritten Ausführungsform, ist das erste Fördermittel 25 auch in der vierten Ausführungsform der Erfindung gemäß Figur 10 als Rückzugsband ausgebildet. Allerdings ist nun auch das zweite Fördermittel 33 der Dreheinrichtung 32 als Rückzugsband ausgestaltet. Die Rückzugsrolle 34 kann dabei in der in Figur 10 dargestellten zurückgezogenen Stellung positioniert sein, während die Dreheinrichtung 32 das zweite Fördermittel 33 dreht. Danach kann die Rückzugsrolle 34 ausgefahren werden, sodass sie einen bündigen Bandübergang zwischen dem zweiten Fördermittel 33 und dem dritten Fördermittel 17 ermöglicht.

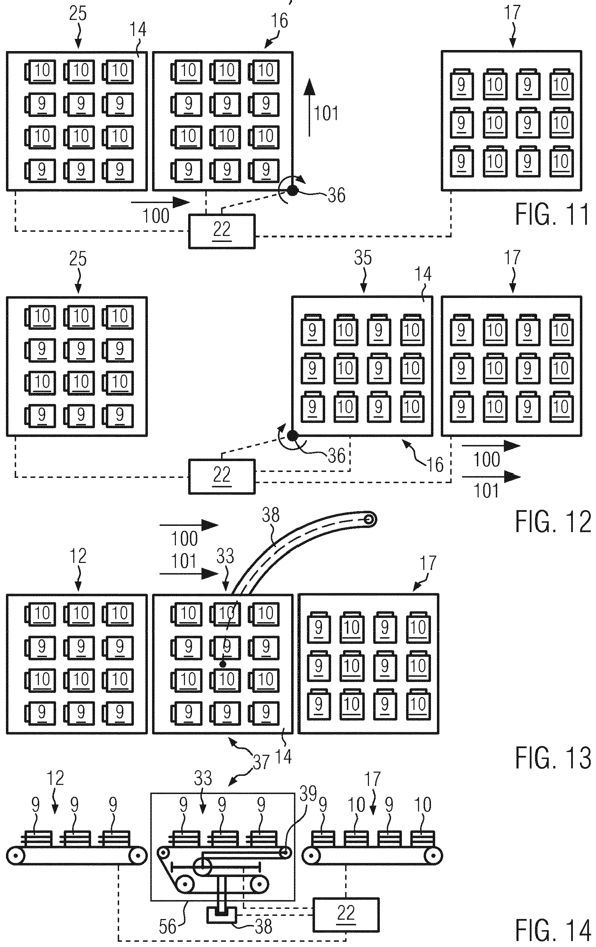

In einer fünften Ausführungsform gemäß Figuren 11 und 12 ist eine Dreheinrichtung 35 vorgesehen, die sich durch eine exzentrische, vertikale Drehachse 36 am zweiten Fördermittel 16 auszeichnet. Wiederum werden Lebensmittelportionen 9, 10 mittels eines als Rückzugsband ausgebildeten ersten Fördermittels 25 auf die Ablagefläche 14 des zweiten Fördermittel 16 aufgebracht, während dieses in einer Ausgangsstellung angeordnet ist, in der seine Förderrichtung 101 in einem Winkel zur Förderrichtung 100 der Produktionslinie ist. Der Winkel beträgt vorteilhafterweise 90°. Sobald ein Formatsatz von Lebensmittelportionen 9, 10 wie in Figur 11 gezeigt auf der Ablagefläche 14 angeordnet ist, wird das zweite Fördermittel 16 um die vertikale Drehachse 36 gedreht, bis das zweite Fördermittel 16 an das dritte Fördermittel 17 angrenzt, und die Förderrichtung 101 des zweiten Fördermittels 16 mit der Förderrichtung 100 des dritten Fördermittels 17 ausgerichtet ist. Dann können die Lebensmittelportionen 9, 10 von dem zweiten Fördermittel 16 auf das dritte Fördermittel 17 weiter gefördert werden. In der vorliegenden Ausführungsform ist die Drehachse 36 räumlich festgelegt. Es kann aber auch vorgesehen sein, dass die Drehachse 36 in Förderrichtung 100 der Produktionslinie linear oder auch nach einem vorgebbaren Weg, beispielsweise einer Bahnkontur, verfahrbar ist. Dies ermöglicht beispielsweise, dass die Ablagefläche 14 unter das erste Fördermittel 12 gefahren werden kann, welches somit nicht als Rückzugsband ausgebildet wird, sondern als gewöhnliches Förderband.

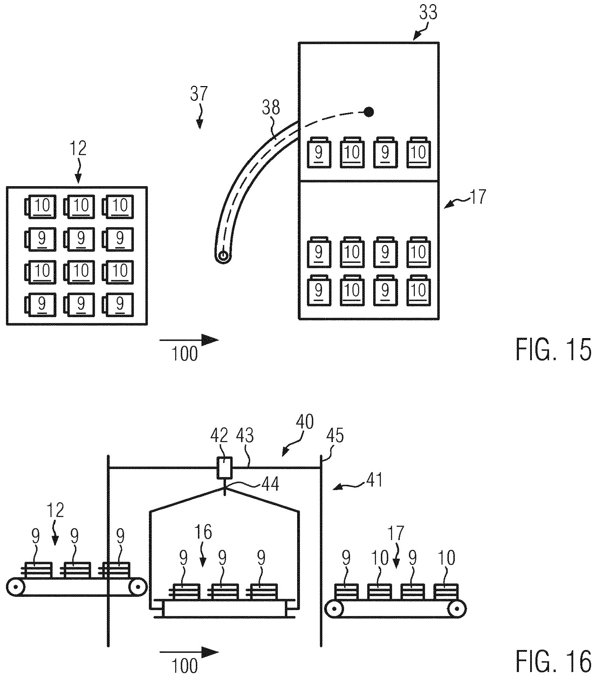

Eine sechste Ausführungsform der Erfindung wird in Figuren 13 bis 15 gezeigt. Die sechste Ausführungsform zeichnet sich dadurch aus, dass die Dreheinrichtung 37 durch eine unterhalb der Auflagefläche 14 angeordnete Bewegungseinrichtung realisiert wird. Im vorliegenden Ausführungsbeispiel handelt es sich dabei um eine Kulissenführung 38 mit der das zweite Fördermittel 16 aus der in Figur 13 dargestellten Ausgangsstellung in die in Figur 15 dargestellte Verdrehstellung bewegt werden kann. In der Ausgangsstellung ist das zweite Fördermittel 16 so ausgerichtet, dass seine Förderrichtung 101 der Förderrichtung 100 der Produktionslinie entspricht. Somit können die Lebensmittelportionen 9, 10 in einfacher Art und Weise direkt von dem ersten Fördermittel 12 auf das zweite Fördermittel 33 gefördert werden.

Das zweite Fördermittel 33 ist insbesondere als Rückzugsförderband ausgebildet, wie in Figur 14 dargestellt. Wenn ein kompletter Formatsatz auf dem zweiten Fördermittel 33 angeordnet ist, so wird das zweite Fördermittel 33 entlang der Kulissenführung 38 bewegt, sodass es in Verdrehstellung neben dem dritten Fördermittel 17 angeordnet wird.

In der dargestellten Ausführungsform kommt es dabei zu einer Verdrehung des zweiten Fördermittels 33 um ca. 90°. Daraufhin wird die Rückzugsrolle 39 des zweiten Fördermittels 33 in die ausgefahrene Stellung über dem dritten Fördermittel 17 gebracht und unter Förderung der einzelnen Lebensmittelportionen 9, 10 vom zweiten Fördermittel 33 auf das dritte Fördermittel langsam zurückgezogen. Damit werden die Lebensmittelportionen 9, 10 im Formatsatz auf das dritte Fördermittel 17 gefördert. Somitwird der ganzen Formatsatz mittels der Dreheinrichtung 37 um 90° gedreht. Insbesondere kann das erste Fördermittel 12 auf gleicher Höhe mit dem zweiten Fördermittel 33 sein, was einen vorteilhaften Bandübergang der Lebensmittelportionen 9, 10 vom ersten Fördermittel 12 zum zweiten Fördermittel 33 ermöglicht.

Alternativ zu der dargestellten Kulissenführung 38 kann ein integrierter Roboter, eine Gelenkarm-Kinematik oder ein pneumatisch oder hydraulisch angesteuerter Kragarm unter dem zweiten Fördermittel 33 vorgesehen sein.

Insbesondere ist die Bewegungseinrichtung ausgelegt, die Auflagefläche 14 auszuschwenken und bereichsweise über das dritte Fördermittel 17 zu bewegen. In einer Ausführungsform kann eine zusätzliche Höheneinstellung am Drehpunkt der Dreheinrichtung 37 vorgesehen sein, beispielsweise über einen Zylinder, eine Schnecke oder eine Spindel. Weiterhin kann vorgesehen sein, die Bewegungseinrichtung schräg anzuordnen, inklusive der Drehachse, um Höhenunterschiede auszugleichen. Ein optionaler Schwenkmechanismus kann vorgesehen sein, um die Auflagefläche 14 in geringem Umfang schräg zu verstellen.

Nach dem Drehen der Lebensmittelportionen 9, 10 einer Formatanordnung um 90°, wird das zweite Fördermittel 33 betätigt, um die Lebensmittelportionen 9, 10 von der Auflagefläche 14 an das dritte Fördermittel 17 abzugeben, welches zur Pufferung zumindest einer Formatanordnung von Lebensmittelportionen 9, 10 ausgebildet ist. Alternativ kann das zweite Fördermittel aber auch ein gewöhnliches Förderband und kein Rückzugsband sein. Dann wird die Bewegungseinrichtung der Dreheinrichtung so ausgelegt, dass das zweite Fördermittel über das dritte Fördermittel bewegt werden kann, während die Lebensmittelportionen von dem zweiten Fördermittel an das dritte Fördermittel abgegeben werden.

In einer weitergehenden Ausführungsform ist es möglich zwei Dreheinrichtungen vorzusehen und ein teilbares zweites Fördermittel, sodass jeweils eine halbe Formatanordnung von Lebensmittelportionen separat verdreht werden kann, bevor diese wieder gemeinsam auf dem dritten Fördermittel abgelegt werden. Dadurch werden ein Gewichtsausgleich und weniger Auslenkung zur Seite ermöglicht. Insbesondere ist jeweils eine Dreheinrichtung auf jeder Seite der Produktionslinie angeordnet.

Wie in Figur 14 dargestellt, kann die Dreheinrichtung 37 in einer modularen Kassette 56 integriert sein. Die Kassette 56 weist die Dreheinrichtung 37 inklusive der zweiten Fördereinrichtung 33 sowie der Kulissenführung 38 und deren Antriebe auf. Die Kassette 56 bildet somit ein autarkes Modul, das in die Produktionslinie bedarfsabhängig integrierbar ist. Insbesondere kann die Kassette 56 gegen eine einfache Kassette mit durchlaufendem Förderband ausgetauscht werden, wenn keine Drehfunktion benötigt wird.

In einer siebten Ausführungsform gemäß Figur 16 umfasst eine Dreheinrichtung 40 einen Portalroboter 41, in dem ein Schlitten 42 zumindest entlang einer Linearführung 43 bewegt werden kann.

Die Linearführung 43 erstreckt sich in Förderrichtung 100 der Produktionslinie. An dem Schlitten 42 ist das zweite Fördermittel 16 um eine vertikale Achse 44 drehbar aufgehängt. Das zweite Fördermittel 16 kann nun, wie in Figur 14 gezeigt, so ausgerichtet werden, dass seine Förderrichtung 101 quer zur Förderrichtung 100 der Produktionslinie steht. Das zweite Fördermittel 16 wird dann mittels des Portalroboters 41 unter das erste Fördermittel 12 gefahren. Dann werden die Lebensmittelportionen 9, 10 auf dem zweiten Fördermittel 16 angeordnet, indem zeitgleich und mit gleicher Geschwindigkeit das Band des ersten Fördermittels 12 und der Schlitten 42 in Förderrichtung 100 bewegt werden.

Nachdem die Formatanordnung von Lebensmittelportionen 9, 10 auf dem zweiten Fördermittel 16 angeordnet ist, wird dieses weiter in Förderrichtung 100 bewegt und dabei gedreht, bis seine Förderrichtung 101 mit der Förderrichtung 100 der Produktionslinie, die der Förderrichtung des dritten Fördermittels 17 entspricht, ausgerichtet ist. Sobald das zweite Fördermittel 16 an das dritte Fördermittel 17 bündig herangefahren ist, kann die gesamte verdrehte Formatanordnung auf das dritte Fördermittel 17 weitergefahren werden. Anstelle des Portalroboters 41 kann auch ein anderer Roboter vorgesehen sein, der oberhalb der Produktionslinie angeordnet ist und ein komplettes Format mitsamt Auflageband umsetzen kann. Dabei ist der Roboterjeweils so ausgelegt, dass er die Auflagefläche 14 des zweiten Fördermittels 16 erfassen und bewegen kann. Erfindungsgemäß ist der Roboter aber an einem Gestell 45 über dem zweiten Fördermittel 16 befestigt. Zum Beispiel ist der Roboter mit seiner Tragkonstruktion am Gestell unmittelbar befestigt. Der Roboter kann modular gestaltet und abnehmbar sein, wenn keine Drehstation im Liniendurchlauf benötigt wird. Weiterhin können der Roboter und seine Tragkonstruktion dafür etwa die Abmessungen der Drehstation aufweisen.

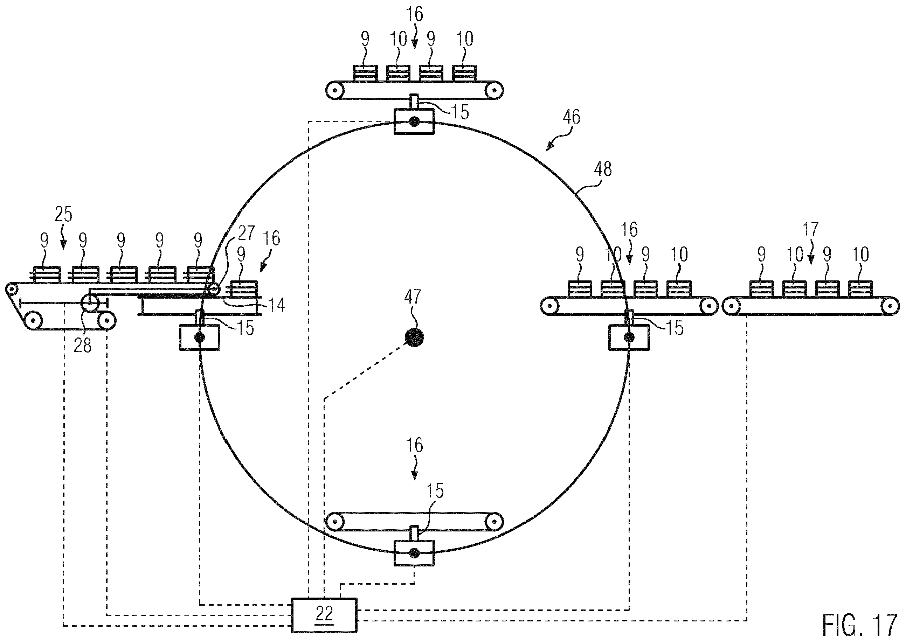

In Figur 17 ist eine achte Ausführungsform der Erfindung dargestellt, bei der die Dreheinrichtung 46 ein um eine horizontale Achse 47 drehendes Drehrad 48 aufweist. Am Drehrad 48 sind um den Umfang verteilt mehrere zweite Fördermittel 16 befestigt, und zwar so, dass sie jeweils um eine vertikale Achse 15 verdreht werden können. Mittels des Drehrades 48 kann nun ein zweites Fördermittel 16 in Ausgangsstellung beim ersten Fördermittel 25 angeordnet werden, das als Rückzugsband ausgestaltet ist.

Dann werden Lebensmittelportionen 9, 10 in einer Formatanordnung auf dem zweiten Fördermittel 16 angeordnet. Das Drehrad 48 dreht bis ein nachfolgendes zweites Fördermittel 16 ohne Lebensmittelportionen 9, 10 bei dem ersten Fördermittel 25 angeordnet ist. Die Lebensmittelportionen 9, 10 werden nun vom Fördermittel 25 auf das zweite Fördermittel 16 gefördert. Zeitgleich wird das bereits beladene zweite Fördermittel 16 um die vertikale Achse 15 verdreht und im weiteren Fortgang mit dem dritten Fördermittel 17 durch Drehung des Drehrades bündig angeordnet. Dann kann die verdrehte Formatanordnung von Lebensmittelportionen 9, 10 auf das dritte Fördermittel 17 weiter gefördert werden.

Das Drehrad 48 ist vorzugsweise nur auf einer Seite der Produktionslinie angeordnet, und die zweiten Fördermittel 16 sind auf Kragarmen angeordnet. Dies ermöglicht, dass die zweiten Fördermittel 16 einfach zu einer Seite abgenommen werden können. Alternativ ist aber auch eine beidseitige Anordnung von Drehrädern möglich, die mit Traversen verbunden sind, auf denen die zweiten Fördermittel 16 angeordnet sind.

Die Merkmale der verschiedenen Ausführungsformen, die vorangehend beschrieben wurden, können beliebig miteinander kombiniert werden.

In den vorangehenden Ausführungsformen weist die Dreheinrichtung vorteilhafterweise zumindest ein angetriebenes Förderband zum Abgeben und/oder Aufnehmen der Lebensmittelportionen 9, 10 in einer Formatanordnung auf. Insbesondere wird ein durchgehendes breites Förderband oder einzeln angetriebene Spuren auf der Dreheinrichtung vorgesehen.

In allen Ausführungsformen kann die Dreheinrichtung als modulare Drehkassette ausgestaltet sein, die alle notwendigen Antriebe aufweist und somit ein autarkes Modul bildet, das in die Produktionslinie bedarfsabhängig integrierbar ist. Somit kann die Drehkassette gegen eine einfache Kassette mit durchlaufendem Förderband ausgetauscht werden, wenn keine Drehfunktion benötigt wird.

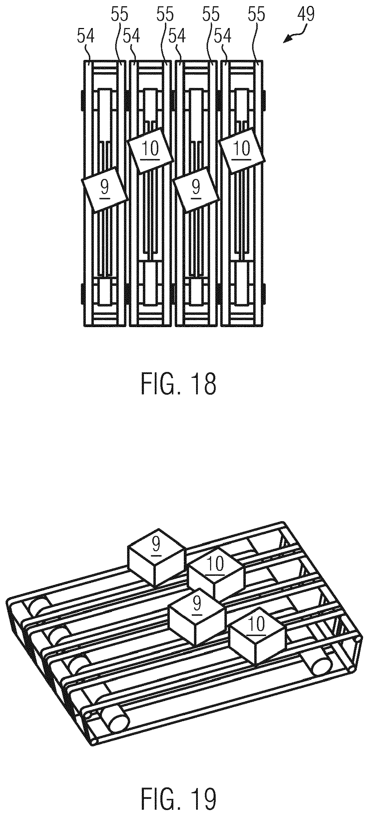

Eine weitere Ausführungsform einer Dreheinrichtung 49 ist in Figuren 18 und 19 gezeigt. Diese Dreheinrichtung weist mehrere parallele Spuren 50, 51, 52, 53 auf, die jeweils ein erstes und zweites Förderband 54, 55 aufweisen. Die Förderbänder 54, 55 sind jeweils mit getrennt ansteuerbaren Antrieben versehen, sodass sie mit unterschiedlicher Geschwindigkeit betrieben werden können. Dadurch ist es möglich, Lebensmittelportionen 9, 10, die in den jeweiligen Spuren angeordnet sind, zu verdrehen. Die Lebensmittelportionen 9, 10 werden vorzugsweise mit etwas Längsversatz verdreht, damit sich ihre Ecken beim Drehen nicht berühren.

In einer weiteren Ausführungsform können sämtliche Lebensmittelportionen einer Formatanordnung gemeinsam bzw. gleichzeitig an einzelnen Punkten auf einer Dreheinrichtung 49 gedreht werden. Beispielweise wird jede Lebensmittelportion mit einem ihr jeweils zugeordneten Drehteller etwas von der Auflagefläche des zweiten Fördermittels angehoben, dann gedreht und danach wieder auf die Auflagefläche abgesetzt. Die Auflagefläche kann aus zwei parallelen Förderbändern bestehen. Die Drehteller sind vorzugsweise miteinander gekoppelt, und sind insbesondere in einer zugeordneten Kulisse geführt, sodass die gleiche Bewegung von mehreren Drehtellern ausgeführt wird, und mehrere Lebensmittelportionen gleich verdreht werden können. Die Kopplung kann insbesondere mittels eines Riementriebs, über eine Hebelanordnung oder über Koppelstangen erfolgen. In dieser Ausführungsform entsteht keine Bandlücke, weil keine Verschiebung der Dreheinrichtung in Förderrichtung nötig ist. Der dargestellte Versatz beim Drehen auf benachbarten Spuren entsteht, weil jeweils die Kulissenführung für benachbarte Drehteller mit etwas Längsversatz eingebaut ist.

Die Erfindung stellt insbesondere ein effizientes Verfahren und eine vorteilhafte Vorrichtung zur Erzeugung von Zweierkombinationen von Lebensmittelportionen bereit, welche im Anschluss in einer Schlauchbeutelverpackungsmaschine gemeinsam in einem Schlauchbeutel verpackt werden können.

Die Formatanordnung der Lebensmittelportionen 9, 10 kann in der Produktionslinie komplett gedreht werden, wobei die Drehfunktion in die Produktionslinie integriert ist.

Die Formatbildung und exakte Ausrichtung von Lebensmittelportionen zueinander kann bereits vor der Dreheinrichtung erfolgen, da die Dreheinrichtung eine Beibehaltung der Formatanordnung ermöglicht. Somit ist nach der Dreheinrichtung nur noch eine Pufferung und gegebenenfalls eine Vereinzelung nachgeschaltet, wobei aber kein Ausrichten und Gruppieren mehr erfolgen muss.

Gegenüber dem Drehen von Einzelportionen wird erfindungsgemäß ermöglicht, dass mit einer einzigen Bewegung immer ein ganzer Formatsatz von Lebensmittelportionen gedreht werden kann, sodass das Drehen keinen Einfluss auf den Fördertakt hat, wobei ausgangsseitig immer mehrere Lebensmittelportionen gepuffert bereitstehen. Gegenüber dem Drehen von Einzelportionen kann das Drehen ganzer Formatanordnungen bei gleichem Durchsatz mit einem geringeren Takt implementiert werden.

## Patentansprüche

1. Vorrichtung zur Handhabung von Lebensmittelportionen (9, 10), umfassend ein erstes Fördermittel (12, 25),
eine Dreheinrichtung (13, 26, 30, 35, 40, 46) mit einem zweiten Fördermittel (16, 33), das eine Ablagefläche (14) bildet, die um eine vertikale Achse (15, 16, 44) verdrehbar ist, ein drittes Fördermittel (17), und eine Steuerung (22),
wobei das erste Fördermittel (12, 25) so ausgelegt ist, dass es zumindest bereichsweise über der Dreheinrichtung (13, 26, 30, 35, 40, 46) anordenbar ist, und
wobei die Steuerung (22) eingerichtet ist, das erste Fördermittel (12, 25) so anzusteuern, dass Lebensmittelportionen (9, 10) in einer Formatanordnung von dem ersten Fördermittel (12, 25) von oben auf die Ablagefläche (14) der Dreheinrichtung (13, 26, 30, 35, 40, 46) abgelegt werden,
die Dreheinrichtung (13, 26, 30, 35, 40, 46) anzusteuern, um die Ablagefläche (14) mit den Lebensmittelportionen (9, 10) um die vertikale Achse zu drehen, und
das zweite Fördermittel (16, 33) anzusteuern, um die verdrehten Lebensmittelportionen (9, 10) auf das dritte Fördermittel (17) weiterzufördern.

2. Vorrichtung nach Anspruch 1, wobei das zweite Fördermittel (16, 33) mehrere mittels der Steuerung (22) separat antreibbare Förderbänder umfasst, die parallel nebeneinander in der Ablagefläche (14) angeordnet sind.

3. Vorrichtung nach einem der vorangehenden Ansprüche, wobei das erste Fördermittel (25) ein Rückzugsband ist, das eine stromabwärtige Rückzugsrolle (27) aufweist, die über die Ablagefläche (14) der Dreheinrichtung (26, 30, 32, 46) bewegbar ist.

4. Vorrichtung nach einem der vorangehenden Ansprüche, wobei die Ablagefläche (14) in Höhenrichtung verstellbar ist, wobei die Steuerung (22) eingerichtet ist, die Ablagefläche (14) zum Verdrehen zumindest aus der Ebene des dritten Fördermittels (17) herauszufahren, und dass die Ablagefläche (14) auf gleiche Höhe mit dem dritten Fördermittel (17) bewegbar ist, und die Steuerung (22) eingerichtet ist, die Ablagefläche (14) auf gleiche Höhe mit dem dritten Fördermittel (17) zu fahren, und dann die Lebensmittelportionen (9, 10) von der Ablagefläche (14) auf das dritte Fördermittel (17) zu fördern.

5. Vorrichtung nach einem der vorangehenden Ansprüche, wobei die Dreheinrichtung (13, 20, 30) so eingerichtet ist, dass die Ablagefläche (14) in Förderrichtung (100) der Produktionslinie bewegbar ist, wobei die Steuerung (22) ausgelegt ist, die Ablagefläche (14) in einer ersten Position zu verdrehen, und in eine zweite Position zu verfahren, in der die Ablagefläche (14) an das dritte Fördermittel (17) angrenzt, und dann Lebensmittelportionen (9, 10) von der Ablagefläche (14) in der Förderrichtung (100) der Produktionslinie auf das dritte Fördermittel (17) zu fördern.

6. Vorrichtung nach einem der vorangehenden Ansprüche, wobei das zweite Fördermittel (33) ein Rückzugsband ist.

7. Vorrichtung nach einem der vorangehenden Ansprüche, wobei die Dreheinrichtung (37) Teil einer modularen Kassette (56) ist, die in eine entsprechende Aufnahme in der Vorrichtung zur Handhabung von Lebensmittelportionen (9, 10) einsetzbar und aus dieser Aufnahme entnehmbar ist.

8. Vorrichtung nach einem der vorangehenden Ansprüche, wobei die Dreheinrichtung (13, 26, 30, 35, 46) so ausgestaltet ist, dass sie innerhalb der bezüglich der Förderrichtung (100) seitlichen Begrenzungen des ersten und/oder dritten Fördermittels angeordnet ist.

9. Vorrichtung nach einem der vorangehenden Ansprüche, wobei die Dreheinrichtung (35) so ausgestaltet ist, dass das zweite Fördermittel (16) um eine exzentrisch angeordnete vertikale Achse verdrehbar ist.

10. Verfahren zur Herstellung von verpackten Lebensmittelportionen (9, 10) mittels einer Produktionslinie, das die folgenden Schritte umfasst:
Aufschneiden eines Lebensmittelprodukts (2, 3, 4, 5), um Lebensmittelportionen (9, 10) zu erzeugen,
Fördern der Lebensmittelportionen (9, 10) entlang einer Förderrichtung (100) der Produktionslinie,
Anordnen der Lebensmittelportionen (9, 10) in einer Formatanordnung,
Drehen der in der Formatanordnung angeordneten Lebensmittelportionen (9, 10) durch eine in die Produktionslinie integrierte Dreheinrichtung (13, 26, 30, 32, 35, 37, 40, 46, 49), und Verpacken der Lebensmittelportionen (9, 10).

11. Verfahren nach Anspruch 10, wobei der Schritt des Anordnens der Lebensmittelportionen (9, 10) in der Formatanordnung umfasst, dass die einzelnen Lebensmittelportionen (9, 10) zueinander in einer vorbestimmten relativen Anordnung ausgerichtet werden, wobei diese relative Anordnung beim Drehen beibehalten wird.

12. Verfahren nach Anspruch 10 oder 11, wobei die Dreheinrichtung (13, 26, 30, 32, 35, 40, 46) ein Fördermittel (16, 33) aufweist, dessen Förderrichtung in einem Winkel zu der Förderrichtung (100) der Produktionslinie steht, während die in der Formatanordnung angeordneten Lebensmittelportionen (9, 10) darauf abgelegt werden, wobei das Fördermittel (16, 33) der Dreheinrichtung (13, 26, 30, 32, 35, 40, 46) dann so ausgerichtet wird, dass seine Förderrichtung (101) in die Förderrichtung (100) der Produktionslinie zeigt, und wobei dann die Lebensmittelportionen (9, 10) von der Dreheinrichtung (13, 26, 30, 32, 35, 40, 46) abgefördert werden.

13. Verfahren nach einem der Ansprüche 10 bis 12, wobei die in der Formatanordnung angeordneten Lebensmittelportionen (9, 10) mittels eines Rückzugsbandes (25) auf die Dreheinrichtung (26, 30, 32, 35, 46) gefördert werden, wobei eine bewegliche Rückzugsrolle (27) des Rückzugsbandes (25) mit einer Relativgeschwindigkeit in der Förderrichtung des Rückzugsbandes (25) über der Dreheinrichtung (26, 30, 32, 35, 46) bewegt wird, und wobei das Rückzugsband (25) mit einer Fördergeschwindigkeit betrieben wird, die auf die Relativgeschwindigkeit abgestimmt ist.

14. Verfahren nach einem der Ansprüche 10 bis 13, wobei die Dreheinrichtung (26, 16, 30, 33) vor, während und/oder nach dem Drehen höhenverstellt und/oder längsverstellt wird, um das Drehen und/oder Abfördern der in der Formatanordnung angeordneten Lebensmittelportionen (9, 10) zu ermöglichen.

15. Verfahren nach einem der Ansprüche 10 bis 14, wobei das Aufschneiden des Lebensmittelprodukts (2, 3, 4, 5) in mehreren Spuren erfolgt, und wobei jeweils wenigstens zwei Lebensmittelportionen (9, 10) aus verschiedenen Spuren durch das Drehen in einer Spur angeordnet werden, und dann zusammen verpackt werden.
